# EUROPEAN PATENT APPLICATION

(11) **EP 2 286 896 A2**
(43) Date of publication of application: **23.02.2011**
(21) Application number: 09746788.0
(22) Date of filing: 16.05.2009
(51) Int. Cl.: B01D 53/56

(54) **CATALYST FOR REMOVING NOX FROM EXHAUST GAS OF LEAN-BURNING AUTOMOBILES OR INCINERATORS**

(30) Priority: 16.05.2008 KR 20080045760
(71) Applicant: Postech Academy-Industry- Foundation, Gyungbuk 790-784 (KR)
(72) Inventor: CHUNG, Jong Shik, Ulju-gun Ulsan 689-804 (KR); PARK, So Ye, Pohang-si Gyungbuk 791-110 (KR); QIANG, Wang, Pohang-si Gyungbuk 790-784 (KR); SOHN, Ji Hyang, Busan 604-765 (KR)
(74) Representative: Ilgart, Jean-Christophe
(86) International application number: PCT/KR2009/002602
(87) International publication number: WO 2009/139609

(57) **Abstract**

The present invention relates to a catalyst for removing NOx contained in exhaust gas, more specifically to a catalyst for removing NOx using metal titanate as a support. The catalyst for removing NOx according to the present invention allows metal titanate to act as a support as well as an adsorption and storage agent (hereafter an adsorption/storage agent) of NOx in lean-burn conditions. Supported noble metals or transition metal components provide a catalyst function which helps adsorption/storage by oxidizing NOx into N02 in lean-burn conditions and participates in the reaction of reducing the adsorbed and stored N02 into N2 in fuel-rich conditions. The catalyst according to the present invention has twice the NOx storage amount of conventional catalysts, for example Ba, and enables effective removal even in operational conditions of a wider range than 150 - 700**°C**. In addition, practical use which has been impossible until now is enabled due to the stable NOx removal capability even in conditions where SOx is present in exhaust gas.

## Description

### Technical Field

The present invention relates to a catalyst for removing NOx from exhaust gas, and more particularly to a catalyst for removing NOx using metal titanate.

### Background Art

In order to efficiently remove NOx, CO and hydrocarbons from the exhaust gas of automobiles using a three-way catalyst system, the air-to-fuel ratio comes close to a stoichiometric ratio (an equivalent ratio of about 14.7). However, excess air should be supplied (fuel-lean) to increase the engine efficiency or to combust fuel having a larger molecular weight (e.g. diesel). As such, because exhaust gas contains a large amount of oxygen, it is difficult to remove NOx using selective reduction. Examples of exhaust gas which contain both NOx and excess air may be found not only in diesel engines and lean-burn gasoline engines, but also in burners and incinerators. In the latter stationary sources, catalysts for selectively reducing NOx to N₂ using ammonia as a specific reducing agent are commercially available but are problematic because ammonia itself has very high toxicity, undesirably causing ammonia slip problems.

Methods of selectively reducing NOx in the exhaust gas of diesel engines or lean-burn engines to N₂ using a reducing agent such as a hydrocarbon or hydrogen in the presence of a catalyst are known to be difficult to perform in the presence of excess oxygen. For example, US Patent No. 6,165,934 discloses a catalyst prepared by adding a copper promoter to a noble metal-containing titanium oxide and then adding a small amount of sodium thereto, but this catalyst is disadvantageous because the NOx conversion is less than 60% and the application temperature is low, as well as because extended stability at high temperature or poisoning problems by sulfur are not mentioned.

Thus, in order to overcome the problems of catalytic selective reduction, there have been proposed methods in which NOx of exhaust gas is adsorbed/stored on a catalyst for a predetermined period of time in an oxidative atmosphere, namely, under fuel-lean conditions, and then the stored NOx is reacted with small amounts of CO, H2, and hydrocarbons in exhaust gas in a reductive atmosphere having a lowered oxygen concentration, namely, under fuel-rich conditions, so that NOx is reduced to N2 and H2O and thereafter discharged (Catalysis Today 96, 2004, 43-52).

Korean Patent No. 10-0408502 discloses an NOx adsorption/storage agent comprising Mordenite having platinum/rhodium/cobalt supported thereon, platinum-supported alumina, and barium oxide, to increase the net catalytic performance. This agent exhibits an NOx removal efficiency of about 82% at about 300 ~ 500**°C** but there is no mention about changes in activity with reaction time at the corresponding temperature or poisoning problems by SOx. Furthermore, because Ba typically reacts with SOx to form a stable material such as Ba (SO₄) , poisoning problems by SOx make it difficult to actually use the above agent.

Various alternatives are devised to solve such problems. For example, US Patent Nos. 5,758,489 and 6,296,822 B1 disclose a catalyst for adsorbing/storing NOx, which is less sensitive to SOx by using lithium, and US Patent No. 0,216,254 A1 discloses the use of a trap comprising a cerium-zirconium composite oxide to avoid SOx problems. Also, US Patent No. 6,296,822 B1 discloses the use of an aluminum-ceria composite as a support for decreasing effects of SOx.

However, the catalysts proposed to date are still insufficient in terms of high-temperature stability, and thus the activity thereof severely may deteriorate with operating time. In particular, in the case where SOx is present in exhaust gas as is the case for diesel engines, an NOx adsorption/storage agent may react with SOS thus forming a stable sulfate compound, and thus it is impossible to actually use such an agent. Specifically, in the case where the temperature of the exhaust gas of an automobile is very high, barium that imparts an NOx adsorption/storage function may react with an active support such as alumina, undesirably deteriorating the function of the support, consequently losing the ability itself to adsorb/store NOx. Also, sulfur contained in a small amount in fuel is converted into SOx in engine exhaust gas, and then reacts with an alkaline metal oxide such as barium oxide necessary for NOx adsorption/storage, thus producing barium sulfate, which is known to be more stable than a nitrate compound to thus make it difficult to be desorbed even in a high-temperature reductive atmosphere. Typically, sulfur regeneration requires a high temperature of 700**°C** or more. At this temperature, the added alkali may evaporate or may easily react with A1203 serving as an active support or SOx, thus causing the adsorption/storage agent to lose activity.

For this reason, methods have not yet been established despite many attempts to remove NOx from lean-burn engine exhaust gas. Therefore, catalysts which are able to adsorb/store large amounts of NOx and are highly resistant to SOx and are stable at high temperature have not yet been proposed.

Moreover, NOx generated from stationary sources such as hot burners or incinerators has been treated by methods of selectively reducing NOx to N₂ in the presence of a catalyst such as V₂O₅/TiO₂ using ammonia as a reducing agent. In this case, however, because unreacted ammonia may be emitted along with the exhaust gas, secondary contamination problems may occur. In commercial processes, many attempts have been made to decrease such ammonia slip to about 10%. Thus, when a series of procedures of adsorbing/storing NOx, emitting the exhaust gas, additionally concentrating and desorbing the NOx adsorbed/stored on the catalyst in a reductive atmosphere, selectively reducing such NOx to N₂ using harmless hydrogen, and regenerating and returning the catalyst are performed, NOx removal efficiency is high and secondary contamination problems due to ammonia may be prevented. This method including merely adsorbing/storing the NOx from a source and separately collecting and regenerating the adsorbed/stored catalyst is regarded as very ideal and economical in terms of treating the NOx in small sources which are inexpensive and have a simple treatment device.

### Disclosure

### Technical Problem

Accordingly, an object of the present invention is to provide a novel catalyst for removing NOx, which exhibits superior NOx adsorption/storage ability.

Another object of the present invention is to provide a method of preparing such a novel catalyst for removing NOx which exhibits superior NOx adsorption/storage ability.

A further object of the present invention is to provide a novel catalyst for removing NOx, which has high resistance to SOx poisoning.

Still a further object of the present invention is to provide a catalyst for removing NOx, which continues to have stable activity even at a high temperature of 500 ~ 700**°C** and exhibits a high ability to remove NOx even at a low temperature of 500**°C** or less.

Yet another object of the present invention is to provide the use of metal titanate as a support of a catalyst for oxidizing and reducing NOx.

Still another object of the present invention is to provide the use of metal titanate as a catalyst for adsorbing/storing NOx.

Still another object of the present invention is to provide a method of removing NOx from a stationary emission source.

### Technical Solution

In order to accomplish the above objects, the present invention provides a catalyst for removing NOx in which one or more selected from the group consisting of noble metals and transition metals are supported on metal titanate.

In the present invention, the catalyst for removing NOx, also referred to as an NOx storage-reduction catalyst, is not theoretically limited but may comprise a metal titanate support which solely functions to adsorb and store NOx, and a noble or transition metal supported thereon and functioning to oxidize or reduce NO.

In the present invention, titanate of metal titanate indicates a layered titanate structure, and an example thereof is represented by M_{2/n}Ti₂O₅, wherein M is a metal cation component selected from the alkali or alkali earth metal group of the periodic table, which is contained to balance the charge of the layered structure, and n is the oxidation state of the cation. The cation component may be typically used alone or in combinations of two or more. In the latter case, for example, MₓTi₂O₅ may be represented by (AₐB_{b},C_{c}..,)Ti₂O₅. As such, A, B, C represent a metal cation such as K⁺, Na⁺, Ba²⁺, Mg²⁺, Sr²⁺ etc., and a, b, c etc. represent the mol of the metal cation component per 2.0 mol of the Ti component. When the oxidation states of the metal cations A, B, C are defined as nₐ, n_{b}, n_{c}, the relationship nₐ+b n_{b}+ c n_{c} + ... = 2 holds true.

In the present invention, the metal of the metal titanate that serves as the support of the catalyst for treating NOx and the adsorption/storage agent may comprise one or more selected from among alkali metals and alkali earth metals. In an embodiment of the present invention, the metal may comprise one or more selected from among K, Li, Na, Ca, Ba, Mg, Ca, and Sr. According to a preferred embodiment of the present invention, the metal titanate is K2Ti2O5.

In the present invention, metal titanate used as the support may be prepared by reacting a metal precursor with a titanium precursor in various states. According to a preferred embodiment of the present invention, the support may be prepared by burning a composite of an aqueous mixture, a slurry mixture containing an organic solvent or a homogeneous mixture of solid powders at high temperature, in which the burning temperature may be set to 300 ~ 1500**°C**, preferably 750 ~ 1,200**°C**.

In an embodiment of the present invention, the metal titanate, for example, K2Ti2O5 may be prepared from a potassium (K) starting material such as KN03, K2CO3, KOH or K2SO4, and a titanium (Ti) starting material such as anatase and rutile Ti02, Ti(OH)4 or titanium alkoxide, or alternatively by synthesizing another alkali metal or alkali earth metal with a Ti intermediate. The preparation procedure may be initiated using a sol-gel process in an aqueous solution, or may be performed using thermal hydrolysis or by homogeneously mixing powders of two components and then burning the mixture at high temperature, but is not limited thereto. According to a more particular and simple example, K2CO3 and anatase Ti02 may be mixed in an aqueous solution or ethanol or the other solvents and then stirred or ball milled thus obtaining a homogenous mixture, which is then dried and burned at about 300 ~ 1500**°C**, preferably 750 ~ 900**°C** for about 1 - 20 hours, preferably 8 - 15 hours, yielding K2Ti2O5 powders. The powders thus obtained may be used after further milling using a ball mill or may be used unchanged.

In the present invention, the metal titanate is used as a main component of the support, and a noble metal and/or a transition metal may be supported on the support, thus preparing a catalyst. The noble metal and/or transition metal supported on the metal titanate support are not theoretically limited but function to oxidize NOx to NO₂ so as to aid adsorption/storage and may participate in reduction of the adsorbed/stored NO2 to N₂, and noble metal components such as platinum, gold, palladium and rhodium or transition metal components such as cobalt, iron, cerium, copper, nickel and manganese may be used alone or in combinations thereof as a doping component. Particularly useful is platinum or rhodium among noble metal components, or cobalt or copper among transition metal components.

In the present invention, supporting the metal component on the metal titanate support may be performed using typical ion exchange, deposition, precipitation, adsorption, impregnation or the like.

In the present invention, when the supporting metal is a noble metal, such a noble metal may be supported in an amount of 0.01 - 10 wt%, preferably 0.1 ~ 1 wt% based on the support, and the transition metal may be supported in an amount of 1 - 40 wt%, preferably 3 - 20 wt% based on the support.

In addition, an aspect of the present invention provides a method of removing NOx from exhaust gas by adsorbing/storing NOx using a catalyst comprising metal titanate.

In the present invention, NOx may be removed in a manner of adsorbing/storing NOx of exhaust gas discharged from automobile engines, stationary engines, incinerators and boilers, selectively reducing the NOx adsorbed/stored on the catalyst using a reducing agent under fuel-rich conditions having low oxygen concentration to thus be converted into N₂, desorbing it, and regenerating the catalyst.

In an embodiment of the present invention, the adsorption/storage of NOx may be carried out at 150 - 700**°C**, and the selective reduction may be performed at 150 - 750**°C**.
The reducing agent used in the selective reduction may include one or more selected from among hydrogen, CO, and hydrocarbons.

In the present invention, metal titanate used for the catalyst support may include one or more alkali or alkali earth metal cation components contained to balance the charge of the titanate structure.

In the present invention, the catalyst may be metal titanate itself, and is not theoretically limited but may include a noble metal or a transition metal able to oxidize NOx to N0₂ in order to aid the adsorption/storage of NOx.

The metal titanate-based catalyst according to the present invention has high NOx adsorption/storage ability, and in particular may exhibit high and stable adsorption/storage ability in the wide temperature range (150 - 700**°C**) . The maximum adsorption capacity thereof may be about 3 mmol/g-cat, which is about three times higher than about 0.8 mmol/g-cat of Ba which is a typical NOx adsorption/storage catalyst. Such performance depends on the superior NOx adsorption/storage ability of metal titanate. The oxidation of NOx to NO₂ to aid the adsorption/storage of NOx is possible when using only Pt on a typical support such as Al₂O₃ or TiO₂, but when a transition metal such as Co or Cu is provided on the metal titanate support according to the present invention, it is possible to obtain an oxidation rate and a low-temperature operating ability that are superior to those that result when Pt is used. In an embodiment of the present invention, NOx adsorbed/stored on the catalyst may be easily reduced to H2O and N2 using a reducing agent such as a hydrocarbon, hydrogen or CO at a stoichiometric air-to-fuel ratio of an automobile or under fuel-rich conditions having low oxygen concentration and be purified. In the case of stationary sources, the adsorbed/stored catalyst may be separately collected and treated under additional reducing conditions and be thus regenerated or repetitively used.

The reduction of stored NOx to N2 depends on the type and amount of supported metal in the medium/low-temperature range (typically 150 - 450**°C**). For example, in the case where a noble metal, such as Pt, is supported, almost all of NOx is converted into N2 and H2O under temperature conditions lower than about 350**°C**. When 2 wt% Pt is used, nearly complete reduction may take place under temperature conditions lower than about 150**°C**. In the high-temperature range (450 - 700**°C**), a noble metal does not need any more, and NOx reduction may efficiently occur when using only a transition metal such as Co or Cu, and is much more economical compared to when a typically known Pt-Ba/A1203 system is used.

As mentioned above, the catalyst according to the present invention has very high resistance to sulfur oxide, and also excellent high-temperature stability. For example, A1203 or BaO easily forms sulfates such as Al₂(SO₄)₃ or BaSO₄ in the presence of SOx and is considered to be weakly resistant to sulfur. However, metal titanate according to the present invention has no reactivity of forming sulfates with SOx. For this reason, even when SOx is at a very high concentration (100 ppm or more), the operation of the catalyst according to the present invention may be stable without severely deteriorating the reactive activity thereof. This is because some SOx adsorbed onto the surface of the catalyst under fuel-lean conditions may be reduced to H2S under fuel-rich conditions and be thus desorbed.
When the severely poisoned catalyst is reduced at 700**°C**, it may be completely regenerated without incurring structural damage.

The catalyst for removing NOx according to the present invention may be applied to purify the exhaust gas of lean-burn engines at high operating temperature and also of diesel engines having a high sulfur content and a low exhaust gas temperature (200 - 500**°C**). Based on the high-temperature stability and sulfur resistance, the catalyst according to the present invention may be applied to stationary sources such as burners or incinerators which have a high exhaust gas temperature or high sulfur content.

In addition, an aspect of the present invention provides the use of the catalyst, comprising metal titanate and a noble metal or transition metal supported thereon, which is provided in the form of being supported on the surface of a monolithic structure such as a honeycombed structure or being incorporated into a monolithic structure, in order to remove NOx from the exhaust gas.

A better understanding of the present invention may be obtained through the following examples which are set forth to illustrate, but are not to be construed as limiting the present invention.

### Advantageous Effects

The present invention pertains to a novel catalyst for treating NOx in such a manner that the NOx of exhaust gas in a fuel-lean state having high oxygen concentration combusted under lean-burn conditions is removed by adsorption/storage using a catalyst, the NOx adsorbed/stored on the catalyst is reduced to N2 using a reducing agent such as hydrogen under fuel-rich conditions having low oxygen concentration and desorbed, and the catalyst is regenerated. This catalyst is prepared by supporting one or more selected from among noble metals such as platinum, palladium and rhodium and transition metals such as cobalt and copper on metal titanate containing an alkali or alkali earth metal cation. The catalysts disclosed in the present invention enable the adsorption/storage of NOx in a wider temperature range (150 ~ 550**°C**) compared to when using conventional catalysts proposed to date, and may have a storage capacity of 3 mmol/g-cat which is evaluated to be at least three times higher than that of such conventional catalysts. Upon operation through fuel-lean and fuel-rich conditions in alternation using the above catalyst, the catalyst is active and stable not only at a low temperature of about 200**°C** but also at a high temperature of 700**°C**. Also, this catalyst does not form a sulfate with the SOx of exhaust gas and becomes stable to SOx. Thereby, this catalyst system can economically and efficiently remove NOx from the exhaust gas of gasoline lean-burn engines or diesel engines. Also, this catalyst can be employed when treating NOx-containing gas emitted from stationary burners.

### Description of Drawings

FIG. 1 is a NO₂ adsorption/storage curve of a K2Ti2O5 catalyst with temperature, under conditions of feed: 900 ppm NO₂, 10% 02 in He; heating rate = 2 **°C**/min; GHSV = 40,000 h⁻¹;
FIG. 2 is an adsorption/storage curve of a 7.5 wt% Co/K2Ti2O5 catalyst with time, under conditions of NO 900 ppm, temperature = 400**°C**; feed: 10% 02 in He; GHSV = 40,000 h⁻¹;
FIG. 3 is a reduction/desorption curve of NOx adsorbed/stored on a (7.0 wt% Co, 1.0 wt% Pt)/K2Ti2O5 catalyst with temperature, under conditions of feed: 3% H₂ in He; heating rate = 2**°C**/min; GHSV = 40,000 h⁻¹;
FIG. 4 is an NOx adsorption/storage curve of a 7.5wt% Co/K2Ti2O5 catalyst with temperature depending on S02 concentration, under conditions of feed: 900 ppm NO₂, 10% 02, 0 - 60 ppm SO₂ in He; heating rate = 2**°C**/min; GHSV = 40,000 h⁻¹; and
FIG. 5 shows changes in concentration of N₂ and N₂O of outlet gases depending on the cycling of lean and rich conditions of fuel in the presence of a 5wt% Cu/K2Ti2O5 catalyst.

### Mode for Invention

### [Example 1]

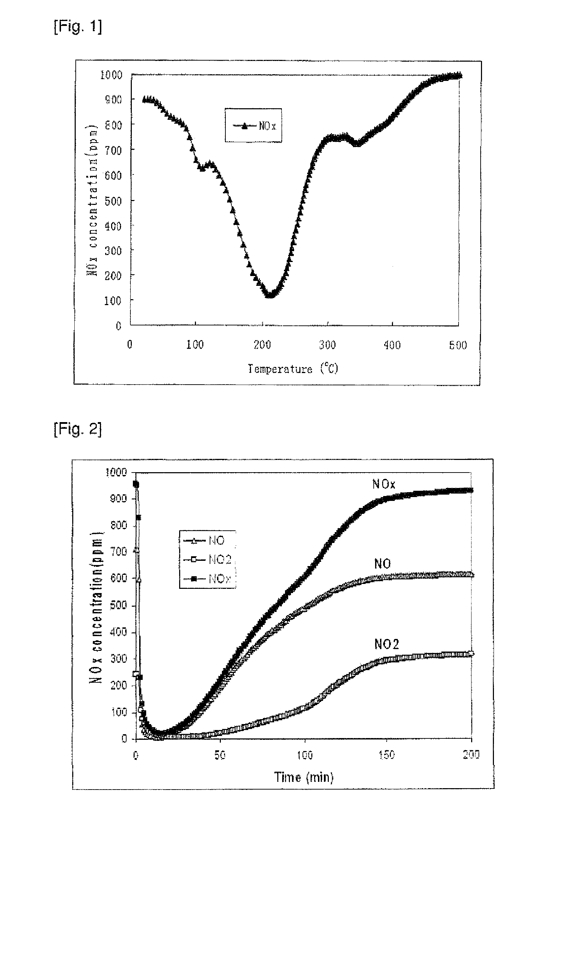

8.65 g of potassium carbonate and 10 g of anatase Ti02 were ball milled in an aqueous solution, dried and burned at 850**°C** for 5 hours thus obtaining K2Ti2O5, which was then pulverized to 80 mesh powder and used as a support and an NOx adsorption/storage catalyst. About 3 g of the catalyst was placed into a reactor, after which the temperature of the reactor was increased from room temperature to 500**°C** at a rate of 2**°C**/min while passing He gas containing 900 ppm NO₂ and 10% 02 through the catalyst at a rate of 3 L/min (GHSV =40,000 h⁻¹). The results are shown in FIG. 1. From this, it can be seen that adsorption/storage occur in the wide temperature range from room temperature to 500**°C**, and NOx is adsorbed in an amount of about 2.5 mmol/g-cat.

### [Example 2]

A predetermined amount of K2Ti2O5 was stirred, and a cobalt acetate aqueous solution was slowly added (incipient wetness method) until just before the outer surface of the catalyst was wet, so that it contained about 7.5wt% Co. The product was dried at 105**°C** overnight, and burned at 500**°C** for 5 hours. The temperature was fixed to 400**°C**, and He gas containing 900 ppm NO and 10% 02 passed through 3 g of the catalyst bed at a rate of 3 L/min, and NOx adsorption performance was measured. The results are shown in FIG. 2. From this, it can be seen that part of the supplied NO is oxidized to N02 by means of the catalyst, and adsorption/storage are saturated with time and thereafter do not occur. The total amount of NOx adsorbed until the time of saturation was measured to be about 3 mmol/g-cat, which is about three times higher than about 0.8 mmol/g-cat of Ba.

### [Example 3]

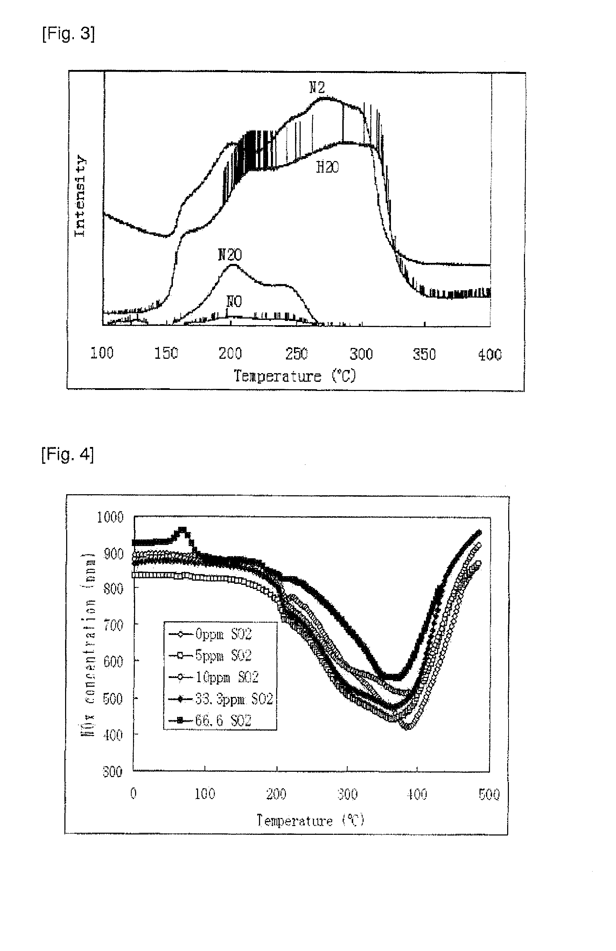

A catalyst was prepared in the same manner as in Example 2, with the exception that 7 wt% Co and 1 wt% Pt were supported using a mixture solution of Co(CH3COO)2.xH2O and H2PtCl6.xH2O, instead of supported Co. NOx was adsorbed/stored under the same conditions as in Example 2, after which the performance of reducing the adsorbed NOx to H2O and N2 was measured while passing He gas containing 3% H2 through a reactor under conditions of GHSV = 40,000 h⁻¹. From FIG. 3, it can be seen that the reduced reactive material mainly includes N2 and H2O, and a small amount of intermediate material N2O is detected at a low temperature of 200 ~ 250**°C** but the complete reduction occurs at 250**°C** or higher.

### [Example 4]

The temperature of a reactor was increased from room temperature to 480**°C** at a rate of 2**°C**/min while passing He gas containing 900 ppm NO, 10% 02 and 0 - 66.6 ppm S02 through the catalyst bed prepared in Example 2. The results are shown in FIG. 4. From this, it can be seen that the NOx adsorption/storage performance is almost the same up to about 30 ppm SO2, and then slightly decreases at about 66 ppm. This catalyst can be seen to exhibit very stable NOx adsorption ability even in the presence of SO2 at a very high concentration.

### [Example 5]

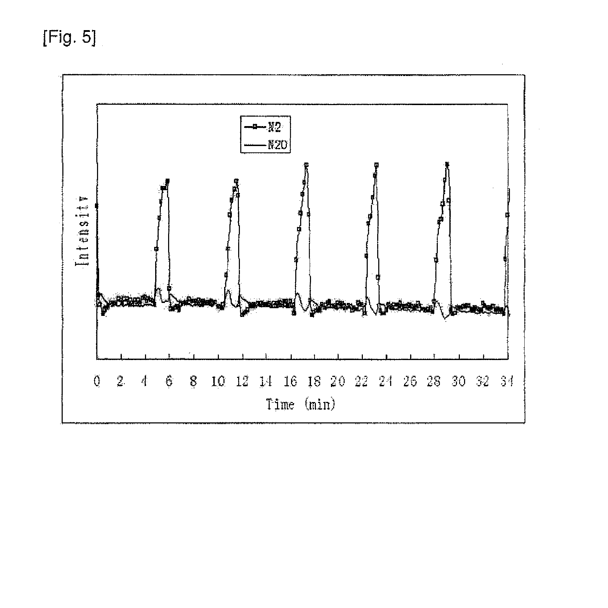

A catalyst was prepared in the same manner as in Example 2, with the exception that 5.0 wt% Cu was supported on K2Ti2O5 prepared in Example 2 using Cu(NO3)2.xH2O, instead of Co. The prepared catalyst was dried at 105**°C** overnight and burned at 850**°C** for 10 hours. Such catalyst powders were placed into a reactor and the cycling test was performed at 570**°C** while supplying the feed under fuel-lean conditions for 5 min and fuel-rich conditions for 1 min in alternation at GHSV = 40,000 h⁻¹. The results are shown in FIG. 5. The gas components in the feed under lean and rich conditions are as follows.
Lean Rich
NO 400ppm 400ppm
02/H2 10 % 02, He balanced 3% H2, He balanced

As shown in FIG. 5, most of the No is oxidized and adsorbed/stored under fuel-rich conditions for 5 min even in the presence of a catalyst having no noble metal, and almost all of the adsorbed/stored NOx is reduced to N2 under fuel-rich conditions for 1 min and discharged. As such, a very small amount of N20 intermediate can be seen to remain. The total NOx removal efficiency is determined to be 87%.

### [Example 6]

A catalyst was prepared as in Example 5, placed into a reactor and pretreated by adding 1,500 ppm S02 to an oxygen-containing air stream at 570**°C** for 8 hours. The catalyst poisoned with S02 in this way was then subjected to a lean-rich cycling test under the same conditions as in Example 5. The test results showed that the average NOx removal efficiency is reduced to 70% but the removal efficiency with time does not change and the catalyst activity is stable throughout. After performing the cycling test for 2 hours, the catalyst was regenerated while allowing nitrogen gas containing 3% H2 to flow at 750**°C**, and then subjected to a lean-rich cycling test. The results showed that the average removal efficiency stays at 83% which is close to the activity of the catalyst of Example 5 which was not been poisoned with sulfur. Upon high-temperature reduction, the catalyst poisoned with high-concentration sulfur can be seen to be regenerated.

### [Example 7]

K1.2Cs0.8Ti2O5 was prepared in the same manner as in Example 1, with the exception that part of 8.65 g of K2(CO3).xH2Owas substituted to CsNO3.xH2O so that K and Cs were added at an equivalent ratio of about 1.2 : 0.8. The NOx adsorption/storage test was performed as in Example 1. The results showed that NOx is adsorbed/stored in an amount of 2.5 ~ 2.8 mmol/g-cat in the temperature range of 200~ 600**°C**, and that maximum adsorption/storage performance is represented at 450**°C** unlike Example 1.

### [Example 8]

K1.6Co0.2Ti2O5 was prepared in the same manner as in Example 1, with the exception that part of 8.65 g of K2(C03).xH2O was substituted to Co(NO3)2.xH2O so that K and Co were added at an atomic ratio of about 1.6 : 0.2. This catalyst was subjected to an NOx adsorption/storage test. The results showed that NOx is adsorbed/stored in an amount of 2.8 - 3.1 mmol/g-cat in the temperature range of 200 ~ 600**°C**, and that maximum adsorption/storage performance is represented at 470**°C**.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A catalyst for treating an exhaust gas containing NOx, comprising a support composed mainly of metal titanate, and a metal component supported on the support and comprising one or more selected from the group consisting of noble metals and transition metals.

2. The catalyst according to claim 1, wherein the metal titanate is represented by (AₐB_{b}..,) Ti₂O₅ in which a relationship of a nₐ+b n_{b} + .. = 2 is formed when oxidation states of metal cations A, B are defined as nₐ, n_{b}, and includes one or more selected from the group consisting of alkali metals, alkali earth metals, and transition metals.

3. The catalyst according to claim 1 or 2, wherein the metal comprises one or more selected from the group consisting of K, Li, Na, Ca, Ba, Mg, Ca, Sr, Co, Cu, Ti, Fe, Ni, Mn, Ce, and Zr.

4. The catalyst according to claim 1 or 2, wherein the noble metal and/or transition metal are selected from the group consisting of platinum, gold, palladium, rhodium, cobalt, iron, cerium, copper, nickel, manganese, zirconium, and combinations thereof.

5. The catalyst according to claim 1 or 4, wherein the noble metal is contained in an amount of 0.01 - 10 wt% based on the support, and the transition metal is contained in an amount of 1 - 40 wt% based on the support.

6. The catalyst according to any one of claim 1 to 3, wherein the support is prepared by reacting a metal precursor with a titanium precursor and then performing burning at a high temperature of 300 ~ 1200**°C**.

7. A method of removing NOx, comprising adsorbing and storing NOx from exhaust gas of an automobile engine, a stationary engine, an incinerator, or a boiler using the catalyst comprising metal titanate of claim 1.

8. A method of removing NOx, comprising adsorbing and storing NOx and selectively reducing the adsorbed and stored NOx to nitrogen using a reducing agent under oxygen-lean fuel-rich conditions, using the catalyst comprising metal titanate of claim 1.

9. The method according to claim 8, wherein the adsorbing and storing are performed at 150 - 700**°C**, and the selectively reducing is performed at 150 - 750**°C**.

10. The method according to claim 8, wherein the reducing agent is selected from the group consisting of hydrogen, CO, hydrocarbon, ammonia, urea and mixtures thereof.

11. A method of removing NOx from exhaust gas, using the catalyst of claim 1 which is provided in a form of being supported on a surface of a monolithic structure including a honeycomb structure or being incorporated into a monolithic structure.
